# EUROPEAN PATENT SPECIFICATION

(11) **EP 1 867 999 B1**
(45) Date of publication and mention of the grant of the patent: **23.05.2012**
(21) Application number: 06733236.1
(22) Date of filing: 10.03.2006
(51) Int. Cl.: G01P 5/00

(54) **METHOD FOR VISUALISING A GAS OR LIQUID FLOW ON AN OBJECT SURFACE**
VERFAHREN ZUR VISUALISIERUNG EINER GAS- ODER FLÜSSIGKEITSSTRÖMUNG AUF EINER OBJEKTOBERFLÄCHE
PROCEDE DE VISUALISATION D'UN COURANT DE GAZ OU DE LIQUIDE A LA SURFACE D'UN OBJET

(30) Priority: 14.03.2005 RU 2005106649; 29.07.2005 RU 2005124235
(43) Date of publication of application: 19.12.2007
(73) Proprietor: Federalnoe Gosudarstvennoe Unitarnoe Predprijatie Central Aerohydrodynamic Institute (FGUP TSAGI) Named after Prof. N.E. Zhukovsky, Moskovskaya obl., 140180 (RU)
(72) Inventor: MOSHAROV, Vladimir Yevgenyevich, Moskovskaya obl., 140180 (RU); RADCHENKO, Vladimir Nikolaevich, Moskovskaya obl., 140180 (RU); ORLOV, Anatoly Antonovich, Zhukovsky, Moskovskaya obl., 140180 (RU)
(74) Representative: Schrell, Andreas
(86) International application number: PCT/RU2006/000108
(87) International publication number: WO 2006/098658

(56) References cited:
- JP-A- 58 182 513
- JP-A- 62 146 967
- SU-A1- 581 435
- SU-A1- 582 487
- US-A- 3 835 703
- US-A- 4 915 975
- US-A- 4 915 975
- VOGEL MICHAEL J ET AL: "Simultaneous measurement of free-surface velocity and surfactant concentration via a common laser probe", REVIEW OF SCIENTIFIC INSTRUMENTS, AIP, MELVILLE, NY, US, vol. 72, no. 2, 1 February 2001 (2001-02-01), pages 1502-1509, XP012038992, ISSN: 0034-6748, DOI: DOI:10.1063/1.1337069

## Description

The invention relates to the field of experimental aero- and hydrodynamics, particularly to optical methods of studying a structure of a gas or liquid stream on object surfaces. Visualization of surface flows makes it possible to determine limit lines of flow, the presence and shapes of boundary layer separation regions, compression shocks, a position of a transition line of a boundary layer, and to gain an impression of a friction stress distribution as well.

The liquid film technique is well known and widely used in the world to visualize surface flows ("Aviation: Encyclopedia", Moscow, The Comprehensive Russian Encyclopedia Publishing House, 1994, p.137). In this technique, a visualizing liquid is applied prior to an experiment onto a surface of a model to be studied. A liquid layer subjected to an outer steam becomes thicker at a boundary layer separation line and becomes thinner at a stream adjunction line. Addition of a solid admixture into a liquid makes it possible to visualize limit lines of flow.

The closest to the claimed method is a method of liquid flow visualization by applying a layer of a viscous liquid, for example a non-gelling oil based paint, onto a surface of an object to be studied, applying foreign particles, for example dry dye particles which are soluble in the paint, onto a surface of the paint, and placing the object to be studied into a flow (Watson Hugh M. L., "Method of fluid flow visualization", US 4,915,975, 1988). The dye particles subjected to an outer flow start to translate across the surface of the object coated with the paint, said particles dissolving in the paint and leave trails (traces) thereby to visualize limit lines of flow.

The disadvantage of the prior art methods is their validity for one occasion only, in other words, one preparation of an object to be studied makes it possible to implement visualization of a surface flow only for one flow-around mode. A pattern of limit lines of flow obtained within a stream cannot be eliminated in a way other than wash of a visualizing layer and repeated preparation of the object to be studied for other flow-around mode.

The disadvantage also consists in the need to have a sufficiently long time for maintaining a stream mode to visualize a flow-around pattern, said time being much longer than a time for going into a mode in order to provide the contribution of an off-design mode into a final flow-around pattern. Said disadvantages result in large time, labor and fund consumption necessary to carry out one compete cycle of studying one object.

The problem of the present invention is to improve effectiveness of a method of gas or liquid flow visualization on object surfaces by providing the possibility to study several flow-around modes per a single preparation of an object.

Said problem is solved and the technical result is achieved by that, in the prior art method of gas or liquid flow visualization on an object surface, the method comprising applying a layer of a viscous liquid with optically foreign particles onto the object surface, placing the object into a gas or liquid stream, and obtaining a pattern of a gas or liquid flow on the object surface viscous liquid-insoluble particles comprise the optically foreign particles, said particles which leave no tracks but move with the viscous liquid while being subjected to an outer stream without change of own state, and to obtain the pattern of the gas or liquid flow on the object surface, there are the steps of: recording two or more sequential images of a particle distribution on the object surface to be studied in a gas stream mode of interest so as to make a displacement of a free surface of the viscous liquid layer subjected to the outer stream during a time of recording a series of sequential images in a flow-around mode to be studied sufficiently less than a recorded surface dimension, for example, to make said displacement not larger than 10% of the recorded surface dimension; and to provide use of said layer for visualizing other flow-around mode, analyzing the recorded sequence of images; determining parameters of a particle motion within the viscous liquid layer; and reconstructing the pattern of the gas or liquid flow on the object surface from the obtained parameters of the particle motion.

The flow history has no effect upon a visualization result because of reconstructing the pattern of the gas or liquid flow on the object surface from the analysis of the sequence of particle distribution images on the object surface in the mode of interest. A residual pattern of the surface flow also not occurs on the object surface (the particles not leave tracks in the viscous liquid), and the object can be used for studying other flow-around mode without additional preparation due to sufficiency of a small displacement of particles for reconstruction of the flow pattern.

In case of studying movable objects, there are errors in visualization of surface flows by the inventive method because of determining parameters of total particle motion caused by both the viscous liquid layer motion on the surface of the object to be studied and the motion of the object itself as a whole. Applicability of the method of gas or liquid flow visualization on a surface for studying movable objects is provided by determining and compensating the motion of the object as a whole. The solution of the problem posed is accomplished by: additional applying an ensemble of markers onto a surface of a movable object to be studied, said markers being rigidly bound with the present surface and optically distinguishable from particles introduced into the viscous liquid, for example, in a dimension, a shape, a color, etc.; recording images of the present ensemble of markers simultaneously with recording distribution images of the particles placed into the viscous liquid on the same or separate frames; determining motion parameters of the object as a whole by analyzing the recorded sequence of marker images; compensating parameters of the particle motion within the viscous liquid layer by a motion of the object as a whole; and reconstructing the gas or liquid flow pattern on the movable object surface from the obtained parameters of the compensated particle motion. The compensation of the particle motion by the motion of the object as a whole makes it possible to separate the particle motion caused only by the motion of the viscous liquid along,the surface of the object to be studied and thereby makes it possible to reconstruct the flow pattern on the surface of the object to be studied.
Fig. 1 is a diagram of realizing the method of the invention for visualizing a gas flow by the example of studying the interaction of a jet with a flat surface, said jet flowing out from a flat nozzle.
Fig. 2 shows results of the steps of recording a sequence of particle distribution images on the surface of a plate to be studied.
Fig. 3 is a map of particle displacement vectors found form the analysis of the sequence of images.
Fig. 4 is a pattern of limit lines of flow formed by a gas jet on the surface of the flat plate, said pattern being reconstructed from the map of particle displacement.
Fig. 5 is a view of a model of a wing within an air stream, having markers and an oil layer containing optically contrast particles and applied onto a surface thereof.
Fig. 6 is a pattern of limit lines of flow on a surface of a wing, reconstructed from two sequential images of a particle distribution without compensation for the displacement of the model as a whole.
Fig. 7 is a pattern of limit lines of flow on a surface of a wing, reconstructed from two sequential images of a particle distribution with compensation for the displacement of the model as a whole.

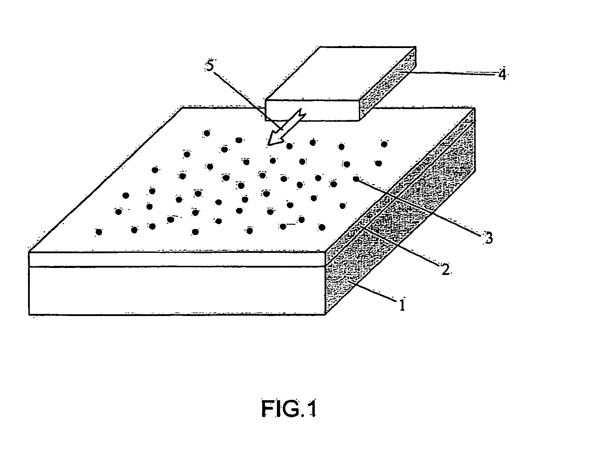

Let us consider implementation of the inventive method by the example of studying the interaction of a jet with a flat surface, said jet flowing out from a flat nozzle, as shown in Fig. 1. To realize the method, a thin layer of a viscous liquid 2, for example silicone oil, is applied onto a surface of a flat plate 1. A viscosity of the liquid is chosen to provide a displacement of the order 0.1 to 1% of a recorded surface dimension (depending upon a resolution of an image detector) for a free surface of the layer subjected to an outer stream during a time of recording a series of sequential images in a flow-around mode to be studied. It is the most convenient to apply the viscous liquid using a sprayer after preliminary dilution of the liquid down to a necessary viscosity by an appropriate solvent. A viscous liquid layer thickness after drying the solvent is of the order of about 20 µm.

Then, optically foreign particles 3 non-soluble in the used viscous liquid are applied onto a surface of the viscous liquid. It is convenient to apply the particles using a sprayer from a suspension of particles in an easy-vaporizable liquid. A quantity of the applied particles is chosen so as to provide visual separation thereof in images to be recorded. In order to increase the contrast of particle images, it is reasonable to use crystal-phosphorus particles of 3 to 5 µm, wherein both large particles and conglomerates thereof, as formed at the step of applying particles, present on the surface.

The alternative method for applying the particles is preliminary kneading in a viscous liquid prior to application of said viscous liquid onto a surface to be studied. With this, the particles will be distributed within the thickness of the viscous liquid layer, which will lead to some reduction in the sensitivity of the inventive visualizing method to outer stream parameters but without an influence upon the operability of the method as a whole.

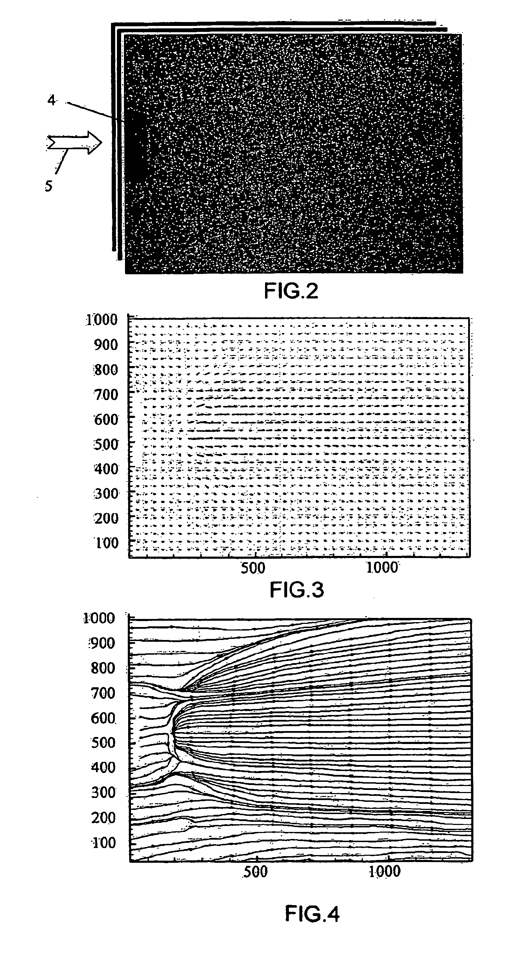

Once the solvent dries, a flat nozzle 4 creating a flow of gas 5 is installed above the surface of the plate. Once the stable gas flow-out mode is established, a series of sequential images of a particle distribution (Fig. 2) is recorded. Using crystal-phosphorus particles, an image of luminescent particles is recorded. Luminescence of particles is excited by an ultraviolet light source, particularly a flash-lamp provided with an ultraviolet light filter. It is convenient to record images by means of a digital CCD camera and to store the digitized images in a computer. An inter-frame period and a frame sequence recording time (in case of more than two frames) are chosen so as to provide a time for a particle displacement over the sequence of images sufficient to determine the present displacement reliably, but with the displacement of the viscous liquid layer being essentially less than a recorded surface dimension. Thus, when a CCD camera having a resolution of 1360x1040 pixels is used to record the sequence of images, a displacement of 0.1 to 1% of the recorded surface dimension is sufficient to determine the particle displacement reliably (cameras having a higher resolution allow reliable determination of a smaller displacement of particles). Larger displacements have no essential influence upon the particle motion parameter determination quality and result only in a stronger redistribution of the viscous liquid layer on the object surface during a time of recording the sequence of images, which prematurely leads to impossibility of further use of the viscous liquid layer for studying other flow-around modes because the viscous liquid goes out of maximum friction stress zones. Thus, displacement of a free surface of the viscous liquid layer subjected to the outer stream during the time of recording the series of sequential images in the flow-around mode to be studied should be essentially less than the recorded surface dimension, in other words, said displacement should be deliberately not larger than 10% of the registered surface dimension, and preferably should not go beyond a particle displacement range sufficient for reliable determination of the present displacements (0.1 to 1% of the recorded surface dimension when a CCD camera having a resolution of 1360x1040 pixels is used).

To find particle motion parameters, a cross-correlation analysis of two images photographed at different times is performed, wherein a matrix of individual pixel displacements (Fig. 3) is found for small areas of an image (for example, windows having a size of 32x32 pixels) from cross-correlation functions. Each element of such a matrix is a respective pixel displacement for an inter-exposition time, wherein a displacement value is proportional to a friction stress at a respective surface point while a displacement direction vector is tangential to a limit line of flow at the present point. When studying surface flows with a large friction stress range, it would be reasonable to perform the similar processing of several pairs of images photographed at different time intervals in order to provide more accurate determination of the particle motion parameters at different regions of the surface to be studied.

The analysis of the obtained displacement matrix allows reconstruction of the surface flow pattern, for example, reconstruction of limit lines of flow on a flat plate, said lines resulting from a gas jet running out of a flat nozzle (Fig. 4). As the particles are chosen to be non-soluble in the viscous liquid, they do not leave tracks on a surface to be studied. Further, to find the displacement matrix, relative small displacements of particles and therefore of the viscous liquid layer are sufficient. Thus, the state of the viscous liquid layer with particles varies insignificantly for a time of studying one flow-around mode, and this layer can be used to study the next flow-around layer without the need to stop the flow and repeatedly prepare the surface to be studied.

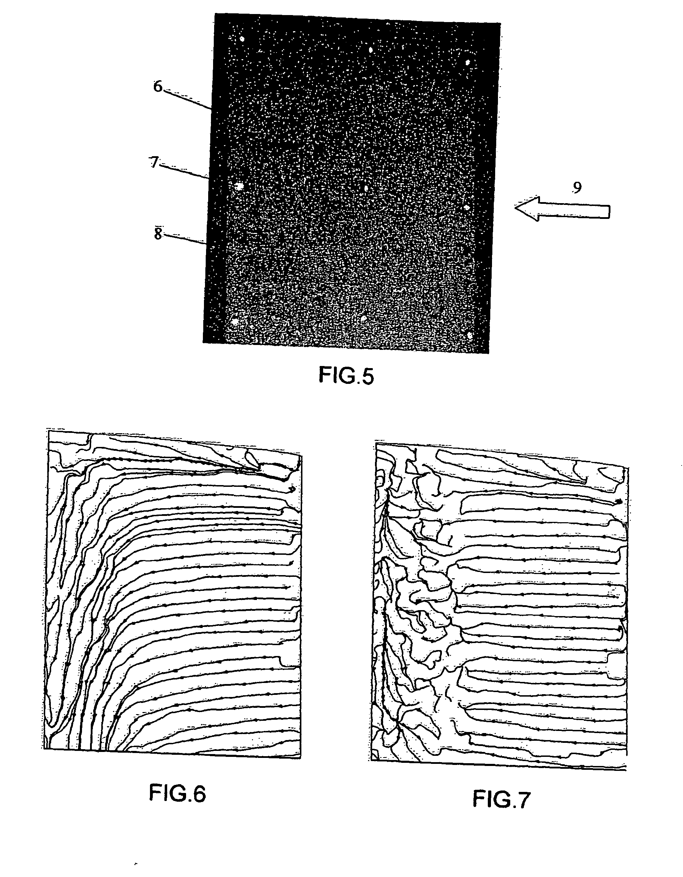

Let us consider implementation of the inventive method for visualizing surface flows on a surface of movable objects by the example of visualizing a flow on an upper surface for a model of a rectangular wing placed into an air flow (Fig. 5). To practice the method, an ensemble of optical markers 7, for example consisting of a solution of phosphor in a transparent lacquer, is applied onto the surface of the rectangular wing. Further, a thin layer of the viscous liquid 8 comprising optically foreign particles, for example, the layer of silicone oil comprising crystal-phosphorus particles similarly to the first example, is applied onto the surface of the wing. Once the solvent dries, the model is installed into an air stream 9. Once the stable flow mode is established, a series of sequential images of a particle distribution (Fig. 5) is recorded similarly to the first example. Simultaneously, both the crystal-phosphorus particles placed into the viscous liquid and the luminescent markers rigidly bound with the surface of the model to be studied are fixed on the recorded images. The crystal-phosphorus particles and the markers on the images are classified according to a size; to this end, the markers are initially made sufficiently large.

To find the particle motion parameters, a cross-correlation analysis of two images photographed at different times is performed, wherein a matrix of individual pixel displacements is found for small areas of an image (for example, windows having a size of 32x32 pixels) from cross-correlation functions similarly to the first example. The analysis of the obtained displacement matrix allows reconstruction of the particle motion pattern, for example, reconstruction of a particle motion path (Fig. 6). However, thus obtained displacement matrix allows a total particle motion produced by both the viscous liquid layer motion and the motion of the model as a whole, particularly caused by vibrations of the experimental plant when the fastening of the model is at insufficiently rigid. To separate the viscous liquid layer motion, it is necessary to determine a displacement of the model as a whole and subtract it from the total particle motion. To this end, coordinates of the optical markers (their centers) are found on the images to be analyzed, and a displacement function of the model as a whole is calculated by the least-square procedure, said function providing the least mean-root-square displacement error for the entire ensemble of markers. Further, displacements caused by the displacement of the model as a whole are calculated using the obtained function for all analyzed areas of the surface to be studied. The obtained displacements are subtracted from the respective total displacements as a result of which a matrix of displacements caused exclusively by the viscous liquid layer motion on the surface of the studied object is obtained. The analysis of thus obtained displacement matrix allows reconstruction of the particle motion pattern, for example, reconstruction of limit lines of flow on the upper surface of the rectangular wing (Fig. 7). Elimination of the contribution made by the displacement of the model as a whole essentially varies the flow visualization pattern on the wing surface, especially in areas of a small friction stress, particularly in separation areas. Thus, once the displacement of the model as a whole is eliminated, a separation area in the vicinity of a wing trailing edge is sharply visualized (Fig. 7), while said edge was not visualized at all without elimination of the displacement of the model as a whole (Fig. 6).

The disclosed example illustrates use of the inventive method in record of markers on the same image together with particles. To simplify formalization of the image processing procedure, the markers can be recorded on individual images (for example, by spectral separating the markers using light filters if the particles and markers have different luminescence spectra, or by time separation thereof if the particles and markers have different luminescence decay times), wherein the markers can be recorded either to an individual image detector simultaneously with record of the particle distribution images or at a minimum delay to the same detector. In case of recording the markers on individual images, the ensemble of said markers can be applied both in the form of a limited set of sufficiently large markers and a lot of small dots distributed arbitrarily. In the latter case, to find a displacement function of an object as a whole, it is reasonable to analyze a sequence of marker distribution images similarly to the analysis of the sequence of particle distribution images and not to find marker coordinates directly.

The disclosed examples illustrate use of the inventive method of gas flow visualization on an object surfaces. The present method can be used equally well to visualize surface liquid flows with the proviso that the viscous liquid applied onto the surface to be studied is insoluble in the liquid of the outer stream.

The method of the invention makes it possible to study several flow modes without necessity to stop the flow each time and prepare a surface to be studied, while the prototype method requires the complete cycle for preparing the surface to be studied for visualization of the single flow mode. The method of the invention also excludes an influence of the non-design flow mode (for example, during start-up of the plant and establishment of the flow mode) upon the final result, which makes it possible to reduce a time for studying one flow mode as compared to the prototype method. Said advantages of the inventive method provide essential reduction in time, labor and fund consumption necessary to carry out one compete cycle of studying an object.

## Claims

1. A method of gas or liquid flow visualization on an object surface, the method comprising:
- arranging a viscous liquid layer (2) with foreign particles (3) on the object surface (1) to be studied;
- placing the object into a gas or liquid stream (5);
- and obtaining a pattern of the gas or liquid flow on the object surface;
the method **characterized in that**
- viscous liquid-insoluble particles comprise the foreign particles (3), said particles placed on a surface of the viscous liquid (2) or into the thickness thereof;
and to obtain the pattern of the gas or liquid flow on the object surface, there are the steps of:
- recording two or more sequential images of a particle distribution on the object surface to be studied in a gas stream mode of interest so as to make a displacement of a free surface of the viscous liquid layer (2) subjected to an outer stream (5) during a time of recording a series of sequential images in a flow-around mode to be studied sufficiently less than a recorded surface dimension, for example, to make said displacement not larger than 10% of the recorded surface dimension, and to provide use of said layer for visualizing other flow-around mode;
- determining parameters of a particle motion within the viscous liquid layer by analyzing the recorded sequence of images
- and reconstructing the pattern of the gas or liquid flow on the object surface from the obtained parameters of the particle motion.

2. The method according to claim 1, **characterized in that**, when a movable object is studied, there are the steps of:
- additional applying an ensemble of markers (7) onto a surface of the movable object (6), said markers being rigidly bound with said surface and optically distinguishable from particles introduced into the viscous liquid (8);
- recording images of said ensemble of markers (7) simultaneously with recording distribution images of the particles placed into the viscous liquid (8) on the same or separate frames;
- determining motion parameters of the object as a whole by analyzing the recorded sequence of marker images;
- compensating parameters of the particle motion within the viscous liquid layer by a motion of the object as a whole;
- and reconstructing the gas or liquid flow pattern on the movable object surface from the obtained parameters of the compensated particle motion.

## Patentansprüche

1. Verfahren zur Visualisierung einer Gas- oder Flüssigkeitsströmung auf einer Objektoberfläche, wobei das Verfahren umfasst:
- Anordnen einer viskösen Flüssigkeitsschicht (2) mit Fremdteilchen (3) auf der zu untersuchenden Objektoberfläche (1),
- Einbringen des Objekts in eine Gas- oder Flüssigkeitsströmung (5),
- und Erhalten eines Musters der Gas- oder Flüssigkeitsströmung auf der Objektoberfläche,
wobei das Verfahren **dadurch gekennzeichnet ist, dass**
- in der viskösen Flüssigkeit unlösliche Teilchen die Fremdteilchen (3) umfassen, wobei die Teilchen auf eine Oberfläche der viskösen Flüssigkeit (2) oder in die Dicke derselben gebracht werden,
und das Erhalten des Musters der Gas- oder Flüssigkeitsströmung auf der Objektoberfläche die Schritte beinhaltet:
- Aufzeichnen von zwei oder mehreren aufeinanderfolgenden Aufnahmen einer Teilchenverteilung auf der zu untersuchenden Objektoberfläche in einem Gasströmungsmodus von Interesse, so dass eine Verlagerung einer freien Oberfläche der viskösen Flüssigkeitsschicht (2), die für eine Aufzeichnungsdauer einer Reihe von aufeinander folgenden Aufnahmen in einem zu untersuchenden Umströmungsmodus einer äußeren Strömung (5) ausgesetzt ist, hinreichend kleiner als eine aufgezeichnete Oberflächenabmessung gemacht wird, beispielsweise so dass die Verlagerung nicht größer als 10% der aufgezeichneten Oberflächenabmessung gemacht wird, und um die Anwendung der Schicht zur Visualisierung eines anderen Umströmungsmodus' bereitzustellen,
- Ermitteln von Parametern einer Teilchenbewegung innerhalb der viskösen Flüssigkeitsschicht durch Analyse der aufgezeichneten Abfolge von Aufnahmen,
- und Rekonstruieren des Musters der Gas- oder Flüssigkeitsströmung auf der Objektoberfläche aus den erhaltenen Parametern der Teilchenbewegung.

2. Verfahren nach Anspruch 1, **dadurch gekennzeichnet, dass** die Untersuchung eines bewegbaren Objekts die Schritte beinhaltet:
- zusätzliches Auftragen einer Anzahl von Markern (7) auf eine Oberfläche des bewegbaren Objekts (6), wobei die Marker fest an die Oberfläche gebunden sind und optisch von Teilchen unterscheidbar sind, die in die visköse Flüssigkeit (8) eingebracht werden,
- Aufzeichnen von Aufnahmen der Anzahl von Markern (7) gleichzeitig mit dem Aufzeichnen von Aufnahmen der Verteilung der in die visköse Flüssigkeit (8) eingebrachten Teilchen auf denselben oder getrennten Einzelbildern,
- Ermitteln von Bewegungsparametern des Objekts als Ganzes durch Analyse der aufgezeichneten Abfolge von Markeraufnahmen,
- Kompensieren von Parametern der Teilchenbewegung in der viskösen Flüssigkeitsschicht durch eine Bewegung des Objekts als Ganzes,
- und Rekonstruieren des Gas- oder Flüssigkeitsströmungsmusters auf der bewegbaren Objektoberfläche aus den erhaltenen Parametern der kompensierten Teilchenbewegung.

## Revendications

1. Procédé de visualisation écoulement gazeux ou liquide sur une surface d'objet, le procédé comprenant :
- l'agencement d'une couche de liquide visqueux (2) avec des particules étrangères (3) sur la surface d'objet (1) devant être étudiée ;
- le placement de l'objet dans un courant gazeux ou liquide (5) ;
- et l'obtention dun motif de l'écoulement gazeux ou liquide sur la surface d'objet ;
le procédé étant **caractérisé en ce que**
- des particules insolubles dans le liquide visqueux comprennent les particules étrangères (3), lesdites particules étant placées sur une surface du liquide visqueux (2) ou dans l'épaisseur de celui-ci ;
et pour obtenir le motif de l'écoulement gazeux ou liquide sur la surface d'objet, il existe les étapes consistant à :
- enregistrer deux images séquentielles ou plus dune distribution particulaire sur la surface objet devant être étudiée dans un mode de courant gazeux pertinent de manière à rendre un déplacement d'une surface libre de la couche de liquide visqueux (2) soumise à un courant externe (5) au cours dune durée d'enregistrement d'une série d'images séquentielles dans un mode d'écoulement circulaire devant être étudié suffisamment inférieur à une dimension de surface enregistrée, par exemple, à rendre ledit déplacement non supérieur à 10 % de la dimension de surface enregistrée, et à fournir l'utilisation de ladite couche pour la visualisation d'un autre mode d'écoulement circulaire ;
- déterminer des paramètres d'un mouvement particulaire au sein de la couche de liquide visqueux en analysant la séquence enregistrée d'images ;
- et reconstruire le motif de l'écoulement gazeux ou liquide sur la surface d'objet à partir des paramètres obtenus du mouvement particulaire.

2. Procédé selon la revendication 1, **caractérisé en ce que**, lorsqu'un objet mobile est étudié, il existe les étapes consistant à :
- appliquer en outre un ensemble de marqueurs (7) sur une surface de l'objet mobile (6), lesdits marqueurs étant fixés de manière rigide à ladite surface et distinguables de manière optique de particules introduites dans le liquide visqueux (8) ;
- enregistrer des images dudit ensemble de marqueurs (7) simultanément à l'enregistrement d'images de distribution des particules placées dans le liquide visqueux (8) sur les mêmes trames ou des trames séparées ;
- déterminer des paramètres de mouvement de l'objet en intégralité en analysant la séquence enregistrée d'images de marqueur ;
- compenser des paramètres du mouvement particulaire au sein de la couche de liquide visqueux par un mouvement de l'objet en intégralité ;
- et reconstruire le motif d'écoulement gazeux ou liquide sur la surface d'objet mobile à partir des paramètres obtenus du mouvement particulaire compensé.
